# EUROPEAN PATENT APPLICATION

(11) **EP 4 775 422 A1**
(43) Date of publication of application: **15.07.2026**
(21) Application number: 24906437.9
(22) Date of filing: 19.12.2024
(51) Int. Cl.: B60J 1/00, B60R 16/02

(54) **VEHICLE AND GLASS ASSEMBLY**

(30) Priority: 20.12.2023 CN 202311759153; 29.03.2024 CN 202410378481
(71) Applicant: Fuyao Glass Industry Group Co., Ltd., Fuqing, Fujian 350300 (CN)
(72) Inventor: ZHANG, Suming, Fuqing, Fujian 350300 (CN); XUE, Xianqi, Fuqing, Fujian 350300 (CN); JIANG, Jiahai, Fuqing, Fujian 350300 (CN); YE, Yunxiang, Fuqing, Fujian 350300 (CN); GUO, Jinfeng, Fuqing, Fujian 350300 (CN); WANG, Zhixin, Fuqing, Fujian 350300 (CN); GUAN, Jinliang, Fuqing, Fujian 350300 (CN)
(74) Representative: Inchingalo, Simona
(86) International application number: PCT/CN2024/140509
(87) International publication number: WO 2025/130958

(57) **Abstract**

The present application relates to a vehicle and a glass assembly. The glass assembly comprises functional glass (10) and a line group (20); the functional glass (10) is provided with an output line (131); the line group (20) comprises a conductive line (21) and a connecting portion (22) connected to one end of the conductive line (21); the connecting portion (22) comprises a carrier (221) and a pressing member (222) detachably mounted on the carrier (221); one end of the conductive line (21) is connected to the carrier (221); one end of the output line (131) is pressed and fixed by the pressing member (222) on the carrier (221); when one end of the output line (131) is pressed and fixed by the pressing member (222), the output line (131) is electrically connected to the conductive line (21); when the output line (131) is separated from the connecting portion (22), the output line (131) is disconnected from the conductive line (21). The functional glass (10) and the line group (20) do not need to be replaced together, so that the maintenance cost is greatly reduced.

## Description

### CROSS-REFERENCE TO RELATED APPLICATIONS

This application claims priority of Chinese Patent Application No. 202311759153X, filed on December 20, 2023, entitled "VEHICLE AND GLASS ASSEMBLY", and Chinese Patent Application No. 2024103784813, filed on March 29, 2024, entitled "VEHICLE AND GLASS ASSEMBLY". The contents of the above identified applications are hereby incorporated herein by reference in their entireties.

### TECHNICAL FIELD

The present application relates to the field of vehicle technology, and in particular to a vehicle and glass assembly.

### BACKGROUND

For many years, conventional flat glass has been used for vehicle glass. In recent years, coated glass and laminated glass have been used to meet various needs. Even so, their inherent functions cannot be changed by weather or environmental changes. With the rapid development of optoelectronic technology, people have high expectations for the functionalization of glass, that is, to enable glass to have functions such as dimming, photovoltaic power generation and regional display according to people's wishes, collectively referred to as functionalized glass. These functionalized glasses typically have a laminated glass structure, including an outer glass sheet, an inner glass sheet, and an intermediate layer. The intermediate layer of the functionalized glass is a functional layer that achieves corresponding functions through electrical conductivity. Therefore, a vehicle mounted with functionalized glass needs to be provided with a wire assembly corresponding to the functional layer provided on a vehicle body to supply current, voltage, and transmit signals to the functional layer.

In the related art, the functionalized glass used in vehicles is mainly mounted on, for example, front and rear windshields, sunroof glass, side window glass, and corner window glass, etc. The functionalized glass is provided with output wires, such as flexible flat cables. A terminal is provided at an adapter of the wire assembly on the vehicle body. After the output wire is rigidly connected to the terminal, they are plugged into the vehicle's power interface to form a complete circuit for functional outputs such as dimming.

However, both during the production process and the use of the functionalized glass, when the connection between the output wire and the terminal fails to conduct or the circuit is damaged, the wire assembly needs to be replaced along with the functionalized glass, resulting in high replacement costs and waste of costs.

### SUMMARY

According to various embodiments of the present application, a vehicle and a glass assembly that can reduce maintenance costs are provided.

A glass assembly includes:
a functionalized glass provided with an output wire; and
a wire assembly including a conductive wire and a docking portion connected to one end of the conductive wire, the docking portion being detachably connected to the output wire; when the output wire is connected to the docking portion, the output wire is electrically connected to the conductive wire; and when the output wire is separated from the docking portion, the output wire is disconnected from the conductive wire.

In one embodiment, the docking portion includes a circuit board and a docking connector provided on the circuit board, the docking connector is electrically connected to the conductive wire, and the docking connector is detachably connected to the output wire.

In one embodiment, the docking connector includes a pressing connector configured to press the output wire against the circuit board; or, the docking connector is provided with a plug-in interface or an engaging interface, and the output wire is plugged into the plug-in interface or engaged with the engaging interface.

In one embodiment, the docking portion includes a carrier and a pressing member detachably mounted on the carrier, one end of the conductive wire is connected to the carrier, one end of the output wire is pressed and fixed on the carrier by the pressing member; when one end of the output wire is pressed and fixed by the pressing member, the output wire is electrically connected to the conductive wire; and when the output wire is separated from the docking portion, the output wire is disconnected from the conductive wire.

In one embodiment, the pressing member is fixed to the carrier by engagement, fastening with a fastener, adhesion, or welding.

In one embodiment, the carrier is provided with two first connecting portions that are spaced apart, opposite sides of the pressing member are respectively fixed to the two first connecting portions by engagement, fastening with the fastener, adhesion, or welding, and the output wire is located in an area between the two first connecting portions.

In one embodiment, the pressing member is provided with at least one protruding portion, the output wire includes at least one first conductive unit, and the protruding portion is correspondingly pressed against the first conductive unit.

In one embodiment, the output wire is configured as a flexible flat cable, the first conductive unit is a flat metal wire provided on the flexible flat cable; a plurality of first conductive units are provided, a plurality of protruding portions are provided, and each protruding portion is correspondingly pressed against each first conductive unit.

In one embodiment, the carrier is provided with a first conductive connection structure electrically connected to one end of the conductive wire, the first conductive connection structure includes at least one first electrical connection portion, the output wire includes at least one first conductive unit, and each first electrical connection portion is electrically connected to each first conductive unit correspondingly.

In one embodiment, the pressing member is provided with a second conductive connection structure, the second conductive connection structure includes at least one second electrical connection portion, when the pressing member is pressed against the output wire, each second electrical connection portion is in close conductive contact with each first conductive unit correspondingly, and each second electrical connection portion is further in close conductive contact with each first electrical connection portion correspondingly; or, when the pressing member is pressed against the output wire, each first conductive unit is in close conductive contact with each first electrical connection portion correspondingly.

In one embodiment, the carrier is provided with a boss, the first electrical connection portion includes a first electrical connection section provided on a top surface of the boss, the output wire is configured as a flexible flat cable, a thickness of the flexible flat cable is defined as d, a distance from the top surface of the boss to a surface of the carrier is defined as S, and 0.8S ≤ d ≤ 1.2S.

In one embodiment, the first electrical connection portion further includes a second electrical connection section provided on a side surface of the boss, the second electrical connection section is electrically connected to the first electrical connection section, and the second electrical connection section is further electrically connected to the conductive wire.

In one embodiment, the carrier is a circuit board, the carrier is provided with a third conductive connection structure located between the conductive wire and the first conductive connection structure, the conductive wire is conductively connected to the first conductive connection structure through the third conductive connection structure, the third conductive connection structure includes at least one adapter wire, each adapter wire is correspondingly electrically connected to each first electrical connection portion, and each adapter wire is correspondingly electrically connected to each second conductive unit of the conductive wire.

In one embodiment, the glass assembly further includes a protective box, the docking portion is mounted in the protective box, and the output wire and the conductive wire respectively extend through the protective box and extend into an interior of the protective box.

In one embodiment, the output wire is provided with a third engaging portion, the carrier or the protective box is provided with a fourth engaging portion engaged with the third engaging portion, and the third engaging portion and the fourth engaging portion are engaged with each other.

In one embodiment, the third engaging portion includes a third buckle provided on the output wire, the fourth engaging portion includes a third engaging groove provided on the carrier or the protective box, and the third buckle is engaged with the third engaging groove; and/or, the fourth engaging portion includes a fourth engaging groove provided on the output wire, the third engaging portion includes a fourth buckle provided on the carrier or the protective box, and the fourth buckle is engaged with the fourth engaging groove.

In one embodiment, the output wire is a flexible flat cable, opposite sides of the output wire are provided with two third engaging portions, respectively, and two fourth engaging portions are provided corresponding to the two third engaging portions.

In one embodiment, the output wire is provided with a first positioning portion, the carrier is provided with a second positioning portion, and the first positioning portion and the second positioning portion are in positioning fit with each other; and/or, the output wire is provided with a third positioning portion, the protective box is provided with a fourth positioning portion, and the third positioning portion and the fourth positioning portion are in positioning fit with each other.

In one embodiment, the first positioning portion includes a first positioning hole provided on the output wire, the second positioning portion includes a first positioning member provided on the carrier, and the first positioning member extends through the first positioning hole; and/or, the first positioning portion includes a second positioning member provided on the output wire, the second positioning portion includes a second positioning hole provided on the carrier, and the second positioning member extends through the second positioning hole; and/or, the third positioning portion includes a third positioning hole provided on the output wire, the fourth positioning portion includes a third positioning member provided on the protective box, and the third positioning member extends through the third positioning hole; and/or, the third positioning portion includes a fourth positioning member provided on the output wire, the fourth positioning portion includes a fourth positioning hole provided on the protective box, and the fourth positioning member extends through the fourth positioning hole.

A vehicle includes the glass assembly and a vehicle body, and the glass assembly is mounted on the vehicle body.

The details of one or more embodiments of the application are set forth in the accompanying drawings and the description below. Other features, objects, and advantages of the application will be apparent from the description and drawings, and from the claims.

### BRIEF DESCRIPTION OF THE DRAWINGS

FIG. 1 is a structural view of a glass assembly according to an embodiment of the present application.
FIG. 2 is an enlarged view of the structure shown in FIG. 1 at position A.
FIG. 3 is a structural view of the structure shown in FIG. 2 with the pressing member removed.
FIG. 4 is a structural view of a glass assembly according to another embodiment of the present application.
FIG. 5 is an enlarged view of the structure shown in FIG. 4 at position B.
FIG. 6 is a structural view of the structure shown in FIG. 5 with the pressing member removed.
FIG. 7 is a structural view of a glass assembly according to yet another embodiment of the present application.
FIG. 8 is a structural view of a glass assembly according to still another embodiment of the present application.
FIG. 9 is a structural view of a glass assembly according to still another embodiment of the present application.
FIG. 10 is a structural view of a functionalized glass according to an embodiment of the present application.
FIG. 11 is a structural view of a glass assembly according to still another embodiment of the present application.
FIG. 12 is an exploded view of a protecting box in the structure shown in FIG. 11.
FIG. 13 is a structural view of the connection between an output wire and a wire assembly in a glass assembly according to still another embodiment of the present application.
FIG. 14 is a structural view of the connection between an output wire and a wire assembly in a glass assembly according to still another embodiment of the present application.
FIG. 15 is a structural view of a glass assembly according to still another embodiment of the present application.
FIG. 16 is an enlarged view of the structure shown in FIG. 15 at position C.

10. Functionalized glass; 11. Outer glass sheet; 12. Inner glass sheet; 13. Functional layer; 131. Output wire; 1311. First conductive unit; 1312. Insulating substrate; 1313. Third engaging portion; 1314. First positioning portion; 1315. Third positioning portion; 14. First adhesive layer; 15. Second adhesive layer; 20. Wire assembly; 21. Conductive wire; 211. Second conductive unit; 22. Docking portion; 221. Carrier; 2211. First connecting portion; 22111. Second engaging portion; 22112. Shaft hole; 2212. Boss; 2213. Fourth engaging portion; 2214. Second positioning portion; 222. Pressing member; 2221. First engaging portion; 2222. Protruding portion; 223. Fastener; 224. Adhesive structure; 225. First conductive connection structure; 2251. First electrical connection portion; 22511. First electrical connection section; 22512. Second electrical connection section; 226. Second conductive connection structure; 2261. Second electrical connection portion; 227. Third conductive connection structure; 2271. Adapter wire; 228. Docking connector; 30. Protecting box; 31. Bottom plate; 32. Cover body; 33. Fourth positioning portion.

### DETAILED DESCRIPTION OF THE EMBODIMENTS

In order to make the above objectives, features and advantages of the present application clear and easier to understand, the specific embodiments of the present application are described in detail below in combination with the accompanying drawings. Many specific details are set forth in the following description to facilitate a full understanding of the present application. However, the present application can be implemented in many ways different from those described herein, and those skilled in the art can make similar improvements without departing from the connotation of the present application. Therefore, the present application is not limited by the specific embodiments disclosed below.

As described in the background, in the related art, when the connection between the output wire of the functionalized glass and the terminal fails to conduct or the circuit is damaged, the wire assembly needs to be replaced along with the functionalized glass, resulting in high replacement costs and waste of costs. The inventor has discovered that the reason for this problem is that the output wire and the terminal in the related art are rigidly connected and fixed together, which makes it impossible to disassemble and replace the wire assembly separately, thus requiring the wire assembly to be replaced along with the functionalized glass, which leads to high replacement costs and waste of costs.

For the reasons mentioned above, the present application provides a technical solution for a vehicle and a glass assembly that can reduce maintenance costs.

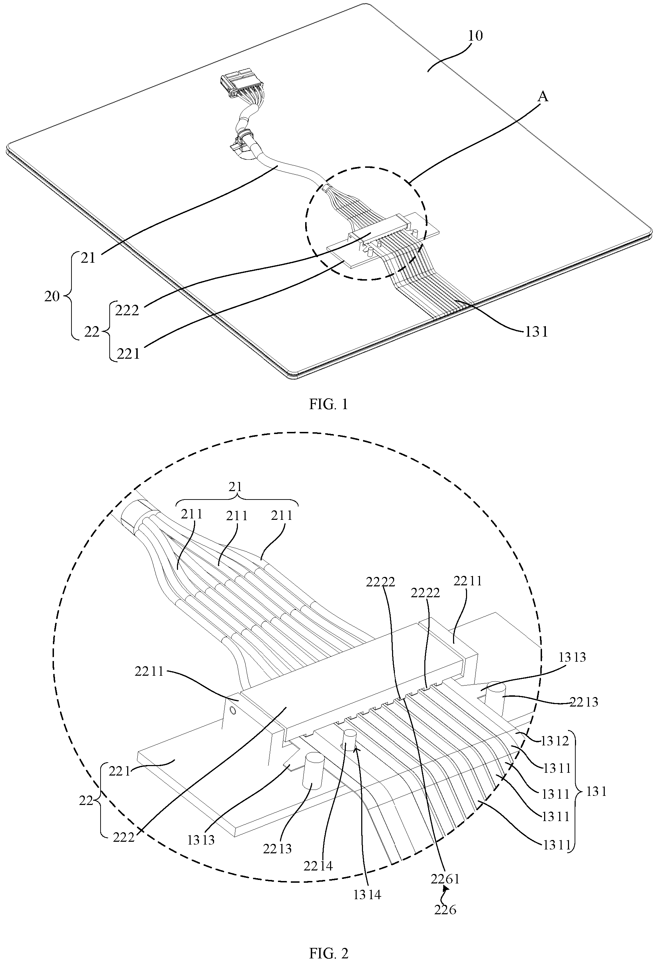

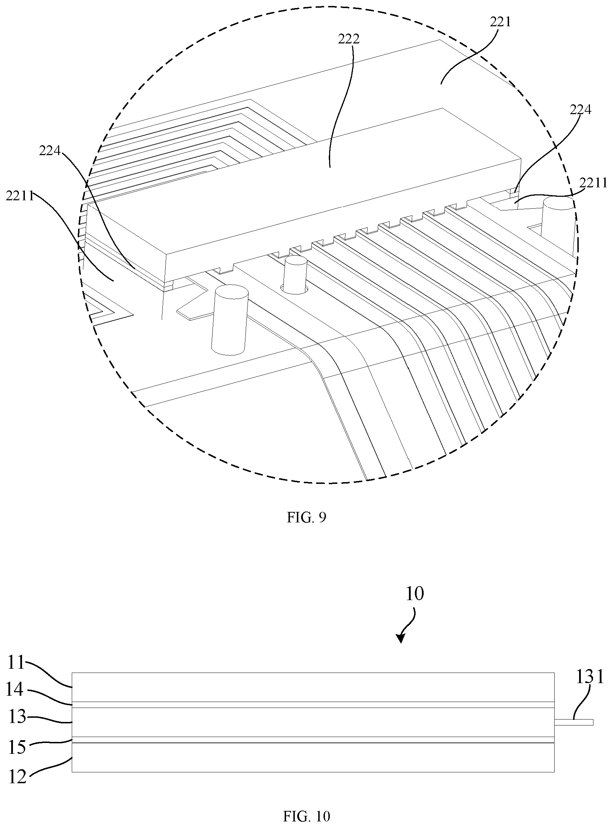

Referring to FIG. 1, FIG. 2, and FIG. 10, FIG. 1 shows a structural view of a glass assembly according to an embodiment of the present application, FIG. 2 shows an enlarged view of FIG. 1 at position A, and FIG. 10 shows a structural view of a functionalized glass 10 according to an embodiment of the present application. A glass assembly provided by an embodiment of the present application includes a functionalized glass 10 and a wire assembly 20. The functionalized glass 10 includes, but is not limited to, front and rear windshields, sunroof glass, side window glass, and corner window glass, etc., and can be configured to implement various functions including, but not limited to, dimming, photovoltaic power generation, and regional display. The functionalized glass 10 is provided with an output wire 131, which includes, but is not limited to, a flexible flat cable or a wire harness. The flexible flat cable is specifically, for example, a flexible printed circuit, a thin-film conductor, a flat cable, etc., which can facilitate electrical connection with other components. The wire harness refers to an assembly of a plurality of wires or cables bundled together. In addition, the wire assembly 20 includes a conductive wire 21 and a docking portion 22 connected to one end of the conductive wire 21. The conductive wire 21 includes, but is not limited to, a wire harness or a flexible flat cable.

The docking portion 22 is detachably connected to the output wire 131. When the output wire 131 is connected to the docking portion 22, the output wire 131 is electrically connected to the conductive wire 21, thereby enabling electrical connection with an external power source, electronic control equipment, etc. When the output wire 131 is separated from the docking portion 22, the output wire 131 is disconnected from the conductive wire 21. The disconnection in this embodiment means that two conductive members are disconnected from each other without being electrically connected.

During operation, since the output wire 131 is connected to the docking portion 22, the output wire 131 is correspondingly electrically connected to the conductive wire 21 to access an external power source, a signal, etc., thus meeting various functional requirements. In addition, since the docking portion 22 is detachably connected to the output wire 131, when the conductive wire 21 and the output wire 131 have, for example, a connection problem and require maintenance, the docking portion 22 and the output wire 131 can be separated, the output wire 131 can be disconnected from the conductive wire 21, and the wire assembly 20 can be disassembled and replaced separately, without having to replace the functionalized glass 10 along with the wire assembly 20, which greatly reduces maintenance costs.

Specifically, the docking portion 22 includes a carrier 221 and a pressing member 222 detachably mounted on the carrier 221. One end of the conductive wire 21 is connected to the carrier 221, and one end of the output wire 131 is pressed and fixed on the carrier 221 by the pressing member 222. When one end of the output wire 131 is pressed and fixed by the pressing member 222, the output wire 131 is electrically connected to the conductive wire 21, thereby enabling electrical connection with an external power source, an electronic control device, etc. When the output wire 131 is separated from the docking portion 22, the output wire 131 is disconnected from the conductive wire 21. The disconnection in this embodiment means that two conductive members are disconnected from each other without being electrically connected.

Referring again to FIG. 10, in some embodiments, the functionalized glass 10 includes, but is not limited to, being configured as laminated glass. The laminated glass includes an outer glass sheet 11 facing an external environment, an inner glass sheet 12 facing an internal environment, and a functional layer 13 provided between the outer glass sheet 11 and the inner glass sheet 12. The functional layer 13 is flexibly adjusted and configured according to actual needs, for example, it can be configured to implement various functions including, but not limited to, dimming, photovoltaic power generation, and regional display.

Specifically, the laminated glass further includes a first adhesive layer 14 provided between the outer glass sheet 11 and the functional layer 13, and a second adhesive layer 15 provided between the inner glass sheet 12 and the functional layer 13. Under the adhesive force of the first adhesive layer 14 and the second adhesive layer 15, the outer glass sheet 11, the functional layer 13, and the inner glass sheet 12 are combined to form an integral structure.

The external environment refers to an environment outside the vehicle, and the internal environment refers to an environment inside the vehicle.

When the functional layer 13 is configured as a dimming functional layer 13, the dimming functional layer 13 includes, but is not limited to, one or a combination of two or more of LC (Liquid Crystal) film, PDLC (Polymer Dispersed Liquid Crystal) film, GHLC (Guest-Host Liquid Crystal), PNLC (Polymer Network Liquid Crystal) functional element, PSLC (Polymer Stabilized Liquid Crystal) film, PILC (Pixel Isolated Liquid Crystal) film, etc.

In some embodiments, the first adhesive layer 14 and the second adhesive layer 15 are each separately provided, including but not limited to being made of PVB material, EVA material, TPU material, or SGP material.

In the aforementioned glass assembly, one end of the output wire 131 is pressed and fixed on the carrier 221 by the pressing member 222, so that the output wire 131 is correspondingly electrically connected to the conductive wire 21 to access an external power source, a signal, etc., thus meeting various functional requirements. In addition, since the pressing member 222 is detachably connected to the carrier 221, when the conductive wire 21 and the output wire 131 have, for example, a connection problem and require maintenance, the pressing member 222 and the carrier 221 can be separated, thereby separating the output wire 131 from the docking portion 22, so that the output wire 131 can be disconnected from the conductive wire 21, and the wire assembly 20 can be disassembled and replaced separately without having to replace the functionalized glass 10 along with the wire assembly 20, which greatly reduces maintenance costs.

In addition, during the manufacturing process, the functionalized glass 10 and the output wire 131 are processed and transported separately, without having to be processed and transported together with the wire assembly 20, which facilitates production operations, improves production efficiency and frequency, avoids problems such as scratches on the functionalized glass 10 and surrounding components by the wire assembly 20 in the related art, and at the same time facilitates product transportation without the need for additional accessories or structures for fixation, thus reducing transportation costs.

In addition, during the transportation, handling, production, etc., of the functionalized glass 10, the loosening of the connection between the output wire 131 and the functional layer 13 and the loosening of the connection between the output wire 131 and the docking portion 22 duo to the pulling and swinging of the output wire 131 by the wire assembly 20 is avoided, thereby reducing the risk of disconnection between the output wire 131 and the functional layer 13 and the risk of disconnection between the output wire 131 and the docking portion 22.

In addition, during the lamination process of functionalized glass 10 in the autoclave, since there is only output wire 131 and no wire assembly 20, the impact of the autoclave on the wire assembly 20 may not be considered. The wire assembly 20 does not need to be made of materials with high temperature and high pressure resistance, which reduces the material cost of the wire assembly 20 and improves the competitiveness of the product. The autoclave refers to a device that degases the laminated glass after the laminated glass is laminated.

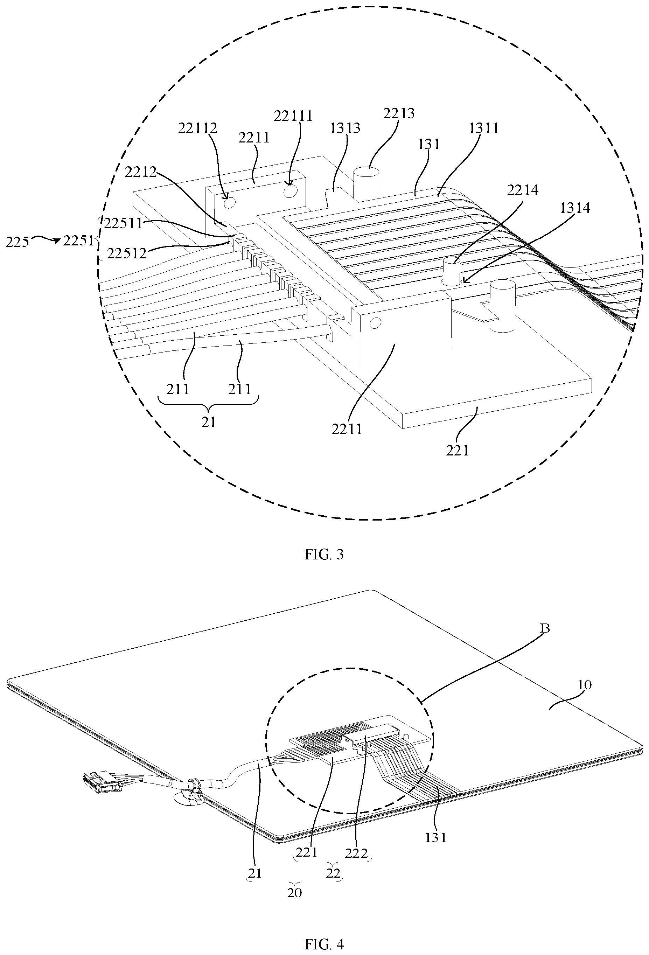

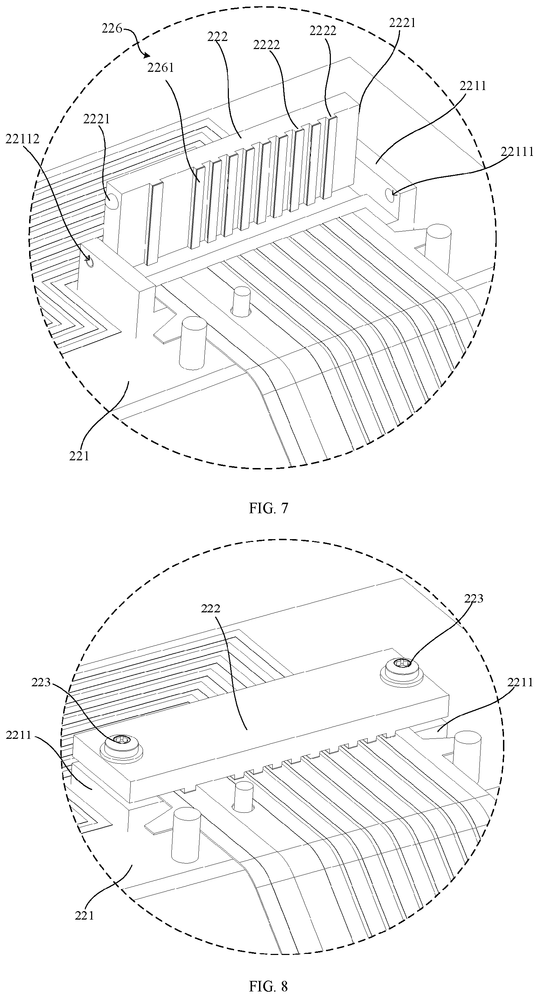

Referring to FIG. 2 and FIG. 4 to FIG. 9, the difference between the structures shown in FIG. 2 and FIG. 4 lies in the presence or absence of a circuit board, and the main difference between the structures shown in FIG. 4 to FIG. 9 lies in the different mounting methods of the pressing member 222 on the carrier 221. In one embodiment, the pressing member 222 is fixed to the carrier 221 by, but not limited to, engagement (as shown in FIG. 2, FIG. 4, or FIG. 7), fastening with fasteners 223 (as shown in FIG. 8), adhesion or welding (as shown in FIG. 9).

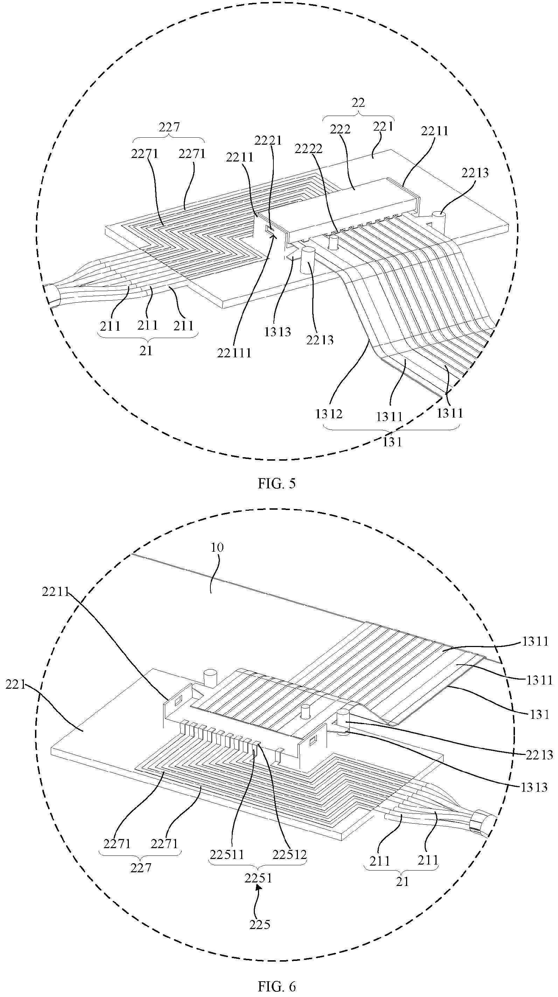

In some embodiments, when the pressing member 222 is engaged with and fixed to the carrier 221, as shown in FIG. 5 and FIG. 6, the pressing member 222 can be engaged with and fixed to the carrier 221 by pressing it in a direction perpendicular to a bearing surface of the carrier 221, that is, pressing the pressing member 222 in a direction perpendicular to the bearing surface of the carrier 221 causes the pressing member 222 to move toward the carrier 221 and be engaged with and fixed to the carrier 221, so that the pressing member 222 correspondingly presses the output wire 131. Conversely, when the pressing member 222 moves away from the carrier 221, the pressing member 222 can be separated from the carrier 221, so that the pressing member 222 correspondingly releases the output wire 131. Alternatively, the pressing member 222 can be engaged with and fixed to the carrier 221 by flipping it, as shown in FIG. 2 and FIG. 3 or FIG. 7. Specifically, one end of the pressing member 222 is rotatably connected to the carrier 221, and the other end of the pressing member 222 is engaged with the carrier 221. By flipping the pressing member 222, the pressing member 222 is engaged with the carrier 221 to press the output wire 131 or separated from the carrier 221 to release the output wire 131. Alternatively, the pressing member 222 can slide in a direction parallel to the bearing surface of the carrier 221 and engaged with and fixed to the carrier 221, that is, by pushing the pressing member 222 to a pressing position, the pressing member 222 can correspondingly press the output wire 131 and be engaged with and fixed to the carrier 221. By pushing the pressing member 222 to a releasing position, the pressing member 222 correspondingly releases the output wire 131. Alternatively, other various engagement methods can be configured according to actual needs.

In some embodiments, referring to FIG. 8, in this embodiment, the fastener 223 includes, but is not limited to, various parts such as a bolt, a screw, a pin, a rivet, etc.

In some embodiments, referring to FIG. 9, when the pressing member 222 is fixed to the carrier 221 by adhesive or welding, in order to improve stability, opposite sides of the pressing member 222 are respectively connected and fixed to the carrier 221 by, for example, an adhesive structure 224 or a welding structure. In addition, in order to facilitate the removal of the pressing member 222 from the carrier 221 for various operations such as maintenance and replacement of the wire assembly, the adhesion firmness between the pressing member 222 and the carrier 221 should not be too strong, so as to ensure that when an external force is applied to the pressing member 222 or the carrier 221, an adhesive material between the pressing member 222 and the carrier 221 can be broken or loosened, thereby achieving the removal of pressing member 222 from the carrier 221. For example, the adhesion firmness between the pressing member 222 and the carrier 221 can be adjusted by flexibly adjusting and controlling the size of an adhesion area between the pressing member 222 and the carrier 221, a thickness of the adhesive material, or selecting an adhesive material that is easy to be cut or torn, so that on the one hand, the adhesion firmness is not too small to fail to enable the pressing member 222 to be stably adhered to the carrier 221, and on the other hand, it is not too large to make it difficult to separate the two under an external force.

Similarly, the welding firmness between the pressing member 222 and the carrier 221 should not be too strong, so as to ensure that when an external force is applied to the pressing member 222 or the carrier 221, a welding material between the pressing member 222 and the carrier 221 can be broken or loosened, thereby achieving the removal of pressing member 222 from the carrier 221. For example, the adhesion firmness between the pressing member 222 and the carrier 221 can be adjusted by flexibly adjusting and controlling the size of a welding area between the pressing member 222 and the carrier 221, a thickness of the welding material, or selecting a welding material that is easy to be cut or torn, so that on the one hand, the adhesion firmness is not too small to fail to enable the pressing member 222 to be stably welded to the carrier 221, and on the other hand, it is not too large to make it difficult to separate the two under the action of external force.

Compared with adhering or welding to the carrier 221, the pressing member 222 is fixed to the carrier 221 by engagement or fastener 223, which can increase the pressing force on the output wire 131, thereby making the electrical contact good and stable, and making it easier to separate the pressing member 222 from the carrier 221 and facilitate various operations such as disassembly, assembly, and maintenance.

Referring to FIG. 2 and FIG. 4 to FIG. 9, in one embodiment, the carrier 221 is provided with two first connecting portions 2211 that are spaced apart. The opposite sides of the pressing member 222 are respectively fixed to the two first connecting portions 2211 by engagement, fastening with the fastener 223, adhesion, or welding. The output wire 131 is located in an area between the two first connecting portions 2211. In this way, the output wire 131 can be firmly pressed and fixed between the pressing member 222 and the carrier 221, thereby improving the stability of conductive contact.

In some embodiments, the pressing member 222 in this embodiment includes, but is not limited to, various regular and irregular pressing structures such as a pressing plate, a pressing block, a pressing strip, a pressing rod, etc., which can be flexibly adjusted and configured according to actual needs. In addition, the carrier 221 includes, but is not limited to, a bearing plate. When the pressing member 222 is configured as a pressing plate, a shape of a plate surface of the pressing plate is, for example, adapted to a shape of a bearing surface of the carrier 221, specifically, both are configured as flat surfaces or curved surfaces. A gap between the pressing plate and the bearing surface of the carrier 221 is small, which is more conducive to pressing and fixing the output wire 131 on the carrier 221, thereby improving the stability of conductive contact.

In some embodiments, the first connecting portion 2211 in this embodiment includes, but is not limited to, various connecting structures such as a connecting plate, a connecting block, a connecting rib, etc.

Specifically, when the opposite sides of the pressing member 222 are correspondingly engaged with and fixed to the two first connecting portions 2211, respectively, the pressing member 222 can be engaged with a spacing area between the two first connecting portions 2211 (as shown in FIG. 2 or FIG. 5) or located on a side of the two first connecting portions 2211 that is away from the carrier 221. Compared to setting the pressing member 222 on the side of the first connecting portion 2211 that is away from the carrier 221, when the pressing member 222 is engaged with the spacing area between the two first connecting portions 2211, a distance between the pressing member 222 and the output wire 131 is relatively smaller, which is conducive to pressing and fixing the output wire 131 on the carrier 221.

Referring to FIG. 2, FIG. 3, FIG. 5, and FIG. 6, in addition, opposite sides of the pressing member 222 are each provided with a first engaging portion 2221, the two first connecting portions 2211 are respectively provided with second engaging portions 22111 that are correspondingly engaged and cooperated with the two first engaging portions 2221, and the first engaging portions 2221 and the second engaging portions 22111 are engaged with each other. The first engaging portion 2221 includes a first buckle provided on the pressing member 222, the second engaging portion 22111 includes a first engaging groove provided on the first connecting portion 2211, and the first buckle is engaged with the first engaging groove; and/or, the first engaging portion 2221 includes a second engaging groove provided on the first connecting portion 2211, the second engaging portion 22111 includes a second buckle provided on the pressing member 222, and the second buckle is engaged with the second engaging groove. Furthermore, when the pressing member 222 is rotatably connected to the first connecting portion 2211, the first connecting portion 2211 is further provided with, for example, a shaft hole 22112, and the pressing member 222 is provided with a rotating shaft that is rotatably provided in the shaft hole 22112. In this way, the pressing member 222 is opened or closed by flipping and is engaged with the carrier 221.

Specifically, referring to FIG. 8, when the opposite sides of the pressing member 222 are respectively fixed to the two first connecting portions 2211 by fastening with the fastener 223, adhesion, or welding, the pressing member 222 can be either located in the spacing area between the two first connecting portions 2211 or located on the side of the two first connecting portions 2211 that is away from the carrier 221. Compared to the pressing member 222 being located in the spacing area between the two first connecting portions 2211, providing the pressing member 222 on the side of the first connecting portion 2211 away from the carrier 221 is more conducive to quickly and stably fixing the pressing member 222 on the first connecting portion 2211.

Referring to FIG. 2 and FIG. 3 or FIG. 5 and FIG. 6, in one embodiment, the pressing member 222 is provided with at least one protruding portion 2222, the output wire 131 includes at least one first conductive unit 1311, and the protruding portion 2222 is correspondingly pressed against the first conductive unit 1311. In this way, when the same pressing force is applied to the pressing member 222, due to the protruding portion 2222 that is correspondingly pressed and fitted with the first conductive unit 1311, the pressing force is more concentrated on the first conductive unit 1311, thereby improving the stability of conductive contact. In order to avoid damage during the pressing process, the protruding portion 2222 is, but is not limited to, an elastic portion, which can be adaptively deformed during the pressing process, thereby further improving the stability of conductive contact.

Specifically, the number and arrangement spacing of the protruding portions 2222 of the pressing member 222 are correspondingly provided according to the number and arrangement spacing of the first conductive units 1311 of the output wire 131, so that each protruding portion 2222 can correspondingly press against each first conductive unit 1311. The first conductive unit 1311 is, for example, a metal wire, a metal sheet, a metal block, a cable, etc. In this embodiment, it is specifically a metal wire. The cross-sectional shape of the metal wire along its length direction includes, but is not limited to, a circle, an ellipse, a polygon, etc. In this embodiment, the metal wire is preferably configured as a flat wire body, so that when the metal wire is pressed and fixed by the pressing member 222, a contact area is larger and the stability of conductive contact can be improved.

In some embodiments, the output wire 131 is, but is not limited to, a wire harness or a flexible flat cable. When the output wire 131 is configured as a flexible flat cable, the flexible flat cable will be specifically described by taking a flexible printed circuit as an example. The flexible flat cable further includes an insulating substrate 1312, which is made of flexible material, and each first conductive unit 1311 is arranged side by side at intervals on the insulating substrate 1312. When the output wire 131 is configured as a wire harness, the output wire 131 further includes an insulating sleeve, and the first conductive unit 1311 is correspondingly configured as a cable, for example, and each first conductive unit 1311 extends through the insulating sleeve.

Referring to FIG. 2 and FIG. 3 or FIG. 5 and FIG. 6, in some embodiments, the conductive wire 21 includes one or more second conductive units 211. The number of the second conductive units 211 of the conductive wire 21 is the same as the number of the first conductive units 1311 of the output wire 131, and each second conductive unit 211 is correspondingly electrically connected to each first conductive unit 1311 to realize the electrical connection between the conductive wire 21 and the output wire 131. In addition, the conductive wire 21 is, but is not limited to, a wire harness or a flexible flat cable. In this embodiment, the conductive wire 21 is specifically configured as a wire harness for detailed description, and the second conductive unit 211 is specifically, for example, a wire or a cable, so that it can be easy to lead out to a target position of a vehicle body to be electrically connected to various devices such as a vehicle body power source and a controller.

Referring to FIG. 2 and FIG. 3 or FIG. 5 and FIG. 6, in a specific embodiment, the output wire 131 is configured as a flexible printed circuit, and the first conductive unit 1311 is a flat metal wire provided on the flexible printed circuit. A plurality of first conductive units 1311 are provided, a plurality of protruding portions 2222 are provided, and each protruding portion 2222 is correspondingly pressed against each first conductive unit 1311.

Referring to FIG. 2 and FIG. 3 or FIG. 6 and FIG. 7, in some embodiments, the carrier 221 is provided with a first conductive connection structure 225 electrically connected to one end of the conductive wire 21. The pressing member 222 is provided with a second conductive connection structure 226. When the pressing member 222 presses one end of the output wire 131, the second conductive connection structure 226 is respectively electrically connected to the first conductive connection structure 225 and one end of the output wire 131, thereby achieving the electrical connection between the output wire 131 and the conductive wire 21.

In some embodiments, the second conductive connection structure 226 in the above embodiments may be omitted. Specifically, the carrier 221 is provided with a first conductive connection structure 225 electrically connected to one end of the conductive wire 21. When one end of the output wire 131 is placed on the carrier 221, it is in direct contact with and conducted to the first conductive connection structure 225, and is stably electrically connected to the first conductive connection structure 225 under the pressing force of the pressing member 222.

In some embodiments, the first conductive connection structure 225 in the above embodiments may be further omitted. Specifically, one end of the conductive wire 21 is directly in electrical contact with and conducted to one end of the output wire 131, and is stably electrically connected under the pressing force of the pressing member 222. Compared to the absence of the first conductive connection structure 225 and/or the second conductive connection structure 226, the first conductive connection structure 225 and/or the second conductive connection structure 226 is more conducive to achieving the stability of conductive contact between a transmission wire and the conductive wire 21.

Referring to FIG. 2 and FIG. 3 or FIG. 5 and FIG. 6, in a specific embodiment, the carrier 221 is provided with a first conductive connection structure 225 electrically connected to one end of the conductive wire 21. The first conductive connection structure 225 includes at least one first electrical connection portion 2251. The output wire 131 includes at least one first conductive unit 1311, and each first electrical connection portion 2251 is electrically connected to each first conductive unit 1311 correspondingly. In this way, the conductive wire 21 does not need to be directly electrically connected to the output wire 131, but is indirectly electrically connected to the output wire 131 through the first conductive connection structure 225. Especially in the scenario where the conductive wire 21 is configured as a wire harness and the output wire 131 is configured as a flexible printed circuit, the conductive contact is more stable and reliable.

The number of the first electrical connection portion 2251 is not limited to one, for example, may be multiple, and the specific number is the same as the number of the first conductive units 1311, so that each first electrical connection portion 2251 can be electrically connected to each first conductive unit 1311.

In one embodiment, the pressing member 222 is provided with a second conductive connection structure 226. The second conductive connection structure 226 includes at least one second electrical connection portion 2261. When the pressing member 222 is pressed against the output wire 131, each second electrical connection portion 2261 is in close conductive contact with each first conductive unit 1311 correspondingly, and each second electrical connection portion 2261 is further in close conductive contact with each first electrical connection portion 2251 correspondingly. Alternatively, when the pressing member 222 presses against the output wire 131, each first conductive unit 1311 is in close conductive contact with each first electrical connection portion 2251 correspondingly.

Referring to FIG. 2 and FIG. 3 or FIG. 5 and FIG. 6, in some specific embodiments, when the pressing member 222 is provided with the protruding portion 2222, each second electrical connection portion 2261 is correspondingly provided on each protruding portion 2222, including but not limited to being connected to a surface of the protruding portion 2222 facing the carrier 221 by printing technology, electroplating technology, surface mount technology (SMT), adhesion, engagement, or fastening using fastener 223.

Referring to FIG. 2 and FIG. 3 or FIG. 5 and FIG. 6, in one embodiment, the carrier 221 is provided with a boss 2212. The first electrical connection portion 2251 includes a first electrical connection section 22511 provided on a top surface of the boss 2212. The output wire 131 is configured as a flexible printed circuit. A thickness of the flexible printed circuit is defined as d, a distance from the top surface of the boss 2212 to the surface of the carrier 221 is defined as S, and 0.8S ≤ d ≤ 1.2S. Specifically, d is, for example, 0.8S, 0.9S, 1S, 1.1S, 1.2S, etc. In this way, a size of d is substantially consistent with that of S, so that the first electrical connection section 22511 and the first conductive unit 1311 are substantially located on the same plane. When the pressing member 222 presses the output wire 131, the second electrical connection portion 2261 can be in close conductive contact with the first electrical connection section 22511 and the first conductive unit 1311 at the same time, and the first electrical connection section 22511 and the first conductive unit 1311 are each subjected to almost the same magnitude of pressing force, so that the conductive contact is stable and reliable. Meanwhile, the pressing member 222 is correspondingly configured as a flat plate, which is convenient for processing.

Certainly, in other embodiments, when the pressing member 222 and the second electrical connection portion 2261 provided thereon are configured as a non-planar structure, such as a curved shape or other shapes, the distance S from the top surface of the boss 2212 to the surface of the carrier 221 is flexibly adjusted accordingly, and is no longer limited to the size relationship in the above embodiments.

Referring to FIG. 2 and FIG. 3 or FIG. 5 and FIG. 6, in one embodiment, the first electrical connection portion 2251 further includes a second electrical connection section 22512 provided on a side surface of the boss 2212. The second electrical connection section 22512 is electrically connected to the first electrical connection section 22511, and the second electrical connection section 22512 is further electrically connected to the conductive wire 21. In this way, the second electrical connection section 22512 can be easily connected to the conductive wire 21. Specifically, each second electrical connection section 22512 can be directly electrically connected to each second conductive unit 211 of the conductive wire 21 correspondingly, such as by welding, using conductive adhesive, using various conductive structures such as metal screws and metal rivets. Alternatively, each second electrical connection section 22512 can be indirectly electrically connected to each second conductive unit 211, that is, a third conductive connection structure 227 is provided between the second electrical connection section 22512 and the corresponding second conductive unit 211.

Specifically, the first electrical connection section 22511 and the second electrical connection section 22512 are combined to form an L-shaped electrode.

Referring to FIG. 5 and FIG. 6, in one embodiment, the carrier 221 is a circuit board. The carrier 221 is provided with a third conductive connection structure 227 located between the conductive wire 21 and the first conductive connection structure 225. The conductive wire 21 is conductively connected to the first conductive connection structure 225 through the third conductive connection structure 227. Specifically, the third conductive connection structure 227 includes at least one adapter wire 2271, each adapter wire 2271 is correspondingly electrically connected to each first electrical connection portion 2251, and each adapter wire 2271 is correspondingly electrically connected to each second conductive unit 211 of the conductive wire 21. In this way, when the carrier 221 is configured as a circuit board, the circuit board is provided with the adapter wire 2271, and the adapter wire 2271 is used for connection, which makes the arrangement position of the conductive wire 21 more flexible. The position of the conductive wire 21 can be flexibly adjusted and configured on the circuit board according to actual needs, so as to facilitate the assembly and connection with the vehicle body.

In some embodiments, the circuit board includes, but is not limited to, a plate made of glass fiber epoxy resin material (also referred to as FR-4 material), which has good insulation, heat resistance, and stability.

Certainly, in some embodiments, referring again to FIG. 2 and FIG. 3, it is not necessary to configure the carrier 221 as a circuit board, that is, it is not necessary to set the adapter wire 2271. Each second conductive unit 211 of the conductive wire 21 is specifically directly electrically connected to each first electrical connection portion 2251 correspondingly.

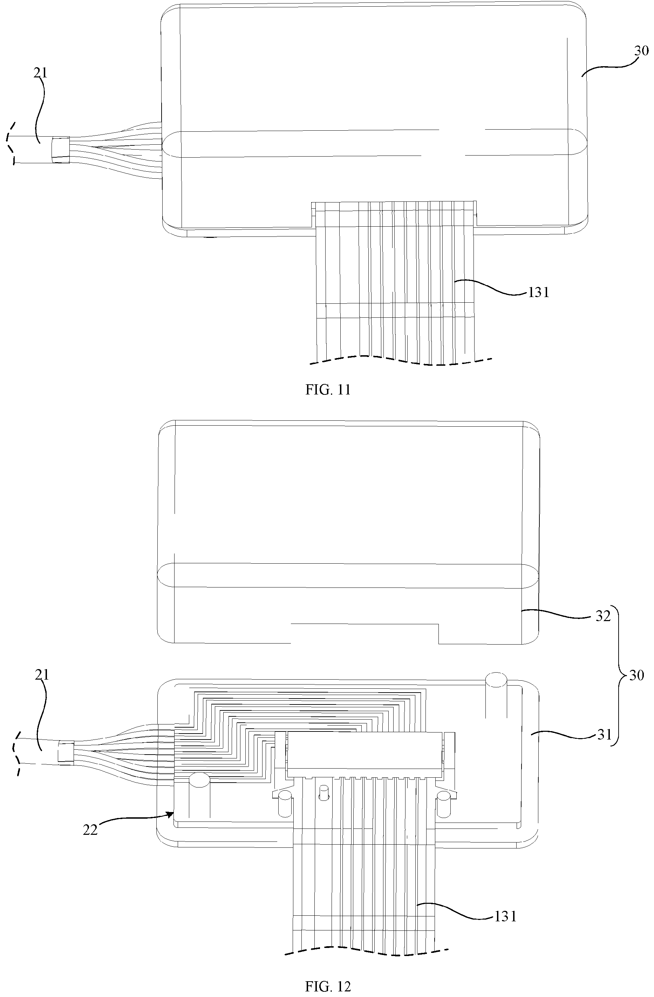

Referring to FIG. 11 and FIG. 12, in one embodiment, the glass assembly further includes a protective box 30. Specifically, the protective box 30 includes a bottom plate 31 and a cover body 32 mounted on the bottom plate 31. The docking portion 22 is mounted in the protective box 30, and the output wire 131 and the conductive wire 21 respectively extend through the protective box 30 and extend into an interior of the protective box 30. In this way, the protective box 30 can protect the docking portion 22 mounted therein, and can prevent the docking portion 22 from being exposed, as well as prevent a joint between the docking portion 22 and the output wire 131 from being exposed, thereby playing a decorative role.

Referring to FIG. 5 and FIG. 6, in one embodiment, the output wire 131 is provided with a third engaging portion 1313, the carrier 221 or the protective box 30 is provided with a fourth engaging portion 2213 engaged with and cooperates with the third engaging portion 1313, and the third engaging portion 1313 and the fourth engaging portion 2213 are engaged with each other. In this way, after the pressing member 222 and the output wire 131 are assembled together, the third engaging portion 1313 and the fourth engaging portion 2213 are engaged with each other, which can increase a bonding force between the output wire 131 and the docking portion 22, thereby improving the stability of the connection between the output wire 131 and the docking portion 22, and preventing the output wire 131 from being easily detached from the docking portion 22 under the action of external force.

In one embodiment, the third engaging portion 1313 includes a third buckle provided on the output wire 131, the fourth engaging portion 2213 includes a third engaging groove provided on the carrier 221 or the protective box, and the third buckle is engaged with the third engaging groove; and/or, the fourth engaging portion 2213 includes a fourth engaging groove provided on the output wire 131, the third engaging portion 1313 includes a fourth buckle provided on the carrier 221 or the protective box, and the fourth buckle is engaged with the fourth engaging groove.

In some embodiments, the third buckle and the fourth buckle are each separately configured and flexibly adjusted and configured according to actual needs, which include, but are not limited to, various structural forms such as bumps, convex columns, buckles, barbs, etc., as long as they can be engaged with their respective corresponding engaging grooves.

Referring to FIG. 5 and FIG. 6, in one embodiment, the output wire 131 is a flexible flat cable, and opposite sides of the output wire 131 are provided with two third engaging portions 1313, respectively, and two fourth engaging portions 2213 are provided corresponding to the two third engaging portions 1313. In this way, two third engaging portions 1313 provided on the opposite sides of the output wire 131 are respectively engaged with the two fourth engaging portions 2213 on the circuit board or the protective box, so that the output wire 131 and the docking portion 22 can be stably connected together, and are not easily detached from the docking portion 22 under the action of external force.

It should be noted that the third engaging portion 1313 may be a part of the output wire 131, that is, the third engaging portion 1313 and other parts of the output wire 131 are integrally formed. Alternatively, the third engaging portion 1313 may be an independent component that can be separated from other parts of the output wire 131, that is, the third engaging portion 1313 may be independently manufactured and then combined with other parts of the output wire 131 to form an integral structure.

Referring to FIG. 5 and FIG. 6, in some embodiments, the output wire 131 is provided with a first positioning portion 1314, and the carrier 221 is provided with a second positioning portion 2214. The first positioning portion 1314 and the second positioning portion 2214 are in positioning fit with each other. In this way, the carrier 221 fixes the output wire 131 through the positioning fit between the first positioning portion 1314 and the second positioning portion 2214, thereby improving the stability of the connection between the output wire 131 and the docking portion 22, and preventing the output wire 131 from being easily detached from the docking portion 22 under the action of external force, which may affect the normal circuit performance.

In some embodiments, the first positioning portion 1314 includes a first positioning hole provided on the output wire 131, the second positioning portion 2214 includes a first positioning member provided on the carrier 221, and the first positioning member extends through the first positioning hole; and/or, the first positioning portion 1314 includes a second positioning member provided on the output wire 131, the second positioning portion 2214 includes a second positioning hole provided on the carrier 221, and the second positioning member extends through the second positioning hole.

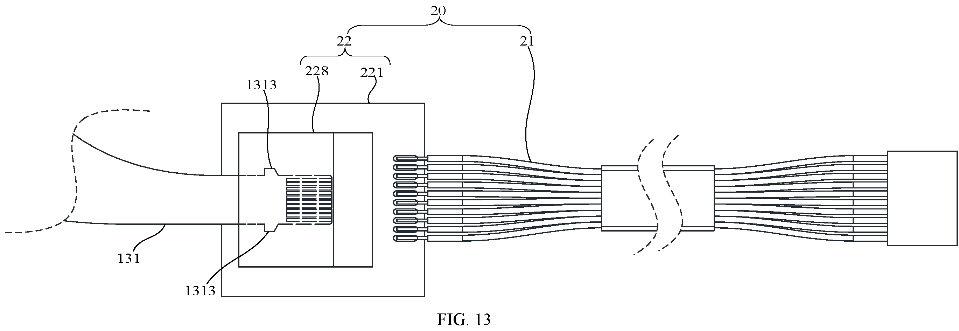

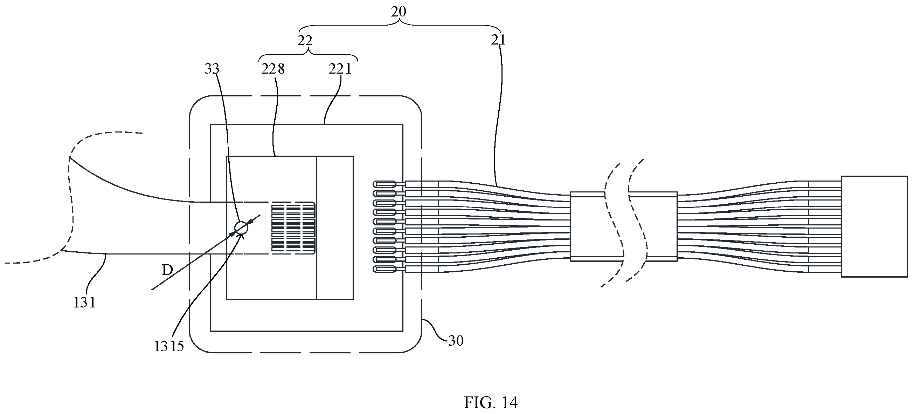

Referring to FIG. 13 and FIG. 14, in one embodiment, the output wire 131 is provided with a third positioning portion 1315, the protective box is provided with a fourth positioning portion 33, and the third positioning portion 1315 and the fourth positioning portion 33 are in positioning fit with each other. In this way, the protective box fixes the output wire 131 through the positioning fit between the third positioning portion 1314 and the fourth positioning portion 33, thereby improving the stability of the connection between the output wire 131 and the docking portion 22, and preventing the output wire 131 from being easily detached from the docking portion 22 under the action of external force, which may affect the normal circuit performance.

In one embodiment, the third positioning portion 1315 includes a third positioning hole provided on the output wire 131, the fourth positioning portion 33 includes a third positioning member provided on the protective box, and the third positioning member extends through the third positioning hole; and/or, the third positioning portion 1315 includes a fourth positioning member provided on the output wire 131, the fourth positioning portion 33 includes a fourth positioning hole provided on the protective box, and the fourth positioning member extends through the fourth positioning hole.

In some embodiments, the third positioning hole and the fourth positioning hole are each separately configured according to actual needs, which include, but are not limited to, regular shapes such as circular holes, elliptical holes, polygonal holes, and other irregular shapes. In this embodiment, the third positioning hole and the fourth positioning hole are each separately configured as, for example, circular holes, and a diameter of the circular holes includes but is not limited to 1mm-10mm, specifically, for example, 1mm, 2mm, 3mm, 4mm, 5mm, or 10mm.

In some embodiments, the third positioning member and the fourth positioning member are each separately configured according to actual needs, which include, but are not limited to, various structural forms such as positioning columns, positioning rods, positioning pins, etc.

It should be noted that the third positioning member may be a part of the protective box, that is, the third positioning member and other parts of the protective box are integrally formed. Alternatively, the third positioning member may be an independent component that can be separated from other parts of the protective box, that is, the third positioning member may be independently manufactured and then combined with other parts of the protective box to form an integral structure.

In some embodiments, the protective box can be configured as an insulating box made of plastic material, or as a metal box made of metal material such as stainless steel, aluminum, copper, etc. In addition, the protective box is provided, for example, with an openable cover, and the disassembly and assembly operations of the docking portion 22 and the output wire 131 can be performed by opening the cover.

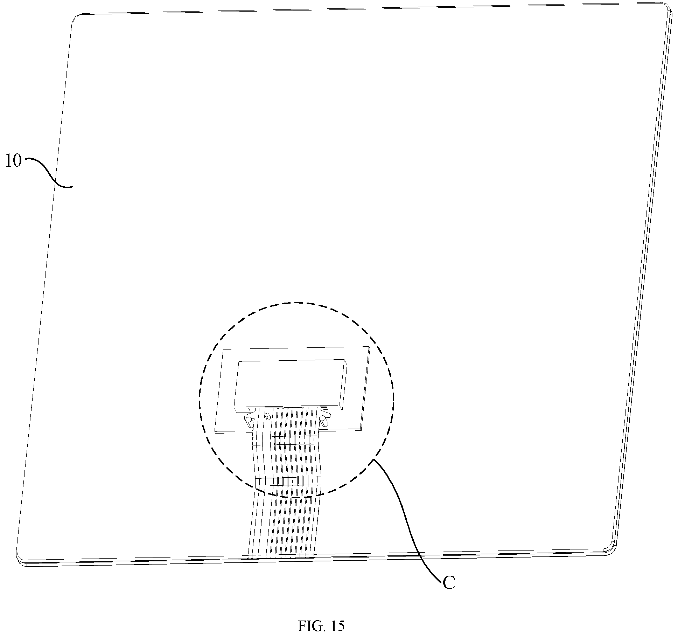

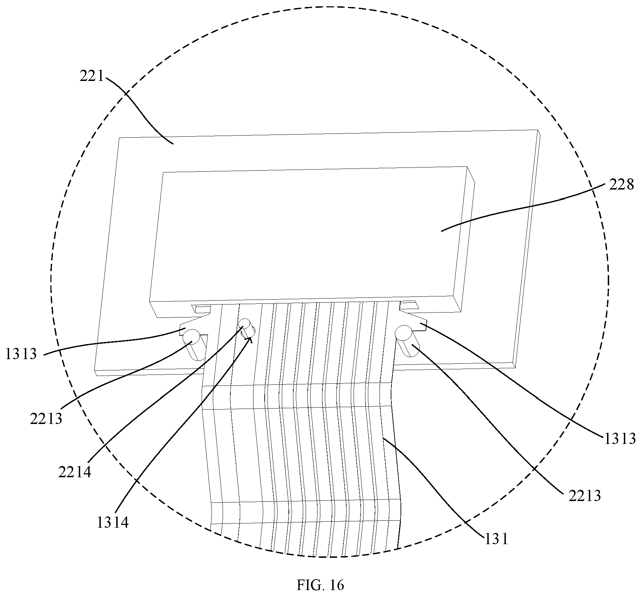

Referring to FIG. 13 to FIG. 16, in one embodiment, the docking portion 22 includes a circuit board and a docking connector 228 provided on the circuit board. The docking connector 228 is electrically connected to the conductive wire 21, and the docking connector 228 is detachably connected to the output wire 131. In this way, the output wire 131 is electrically connected to the docking connector 228 by being connected to the docking connector 228, and then electrically connected to the conductive wire 21. When the docking connector 228 is opened, the output wire 131 is detached from the docking connector 228, so that the wire assembly 20 can be detached and replaced, and the disassembly and assembly operations of the wire assembly 20 are relatively convenient and fast.

Referring to FIG. 13 to FIG. 16, in some embodiments, the docking connector 228 includes a pressing connector configured to press the output wire 131 against the circuit board. The pressing connector serves to press and fix the output wire 131, which is the same as the function of the pressing member 222 in any of the above embodiments. The docking connector 228 presses the output wire 131 against the circuit board, thereby achieving an electrical connection between the output wire 131 and the circuit board. When the docking connector 228 releases the output wire 131, the output wire 131 can be removed, which facilitates the disassembly and assembly operations of the wire assembly 20.

Specifically, the docking connector 228 can be flip-openably provided on the circuit board. After the docking connector 228 is flipped and opened, the docking connector 228 can correspondingly release the output wire 131. When the docking connector 228 is flipped and closed on the circuit board, the docking connector 228 can correspondingly press the output wire 131. Alternatively, the docking connector 228 can be slidably provided on the circuit board. By pushing the docking connector 228 to a pressing position, the docking connector 228 can correspondingly press the output wire 131. By pushing the docking connector 228 to a releasing position, the docking connector 228 correspondingly releases the output wire 131. Alternatively, the docking connector 228 can be pluggably provided on the circuit board in a direction perpendicular to a surface of the circuit board. When the docking connector 228 is pulled outward in a direction away from the circuit board, the docking connector 228 correspondingly releases the output wire 131. Conversely, when the docking connector 228 is pressed in a direction close to the circuit board, the docking connector 228 correspondingly presses the output wire 131. Alternatively, a fastener 223 is provided, the docking connector 228 is connected to the circuit board through the fastener 223. By adjusting the tightness of the fastener 223, the output wire 131 can be correspondingly released or pressed. The fastener 223 includes, but is not limited to, screws, bolts, etc.

Referring to FIG. 13 to FIG. 16, in some embodiments, the docking connector 228 is not limited to being configured as the pressing connector in the above embodiment, but may also be provided with a plug-in interface or an engaging interface, and the output wire 131 is plugged into the plug-in interface or engaged with the engaging interface. When the output wire 131 is plugged into the plug-in interface or engaged with the engaging interface, the output wire 131 is electrically connected to the docking connector 228, thereby being electrically connected to the conductive wire 21. Conversely, when the output wire 131 is pulled out from the plug-in interface or the engaging interface, the output wire 131 is disconnected from the docking connector 228.

Referring to FIG. 13 to FIG. 16, in one embodiment, the docking connector 228 is welded to the circuit board, and the conductive wire 21 is welded to the circuit board. In this way, the docking connector 228, the circuit board, and the conductive wire 21 form a conducting circuit. When the docking connector 228 is connected to the output wire 131, the output wire 131 can be connected to an external power source, a signal, etc., thus meeting various functional requirements. In addition, after the docking connector 228, the circuit board, and the conductive wire 21 are assembled together, the combination is stable and not easy to loosen, and has good electrical performance.

Specifically, the mating connector 228 is welded and mounted on the circuit board by, for example, SMT (Surface Mount Technology).

In one embodiment, a vehicle includes, but is not limited to, an automobile, a bus, a car, a passenger bus, a coach, a truck, a jeep, a train, a high-speed rail, etc. The vehicle includes the glass assembly according to any of the above embodiments, and further includes a vehicle body, and the glass assembly is mounted on the vehicle body.

In the aforementioned vehicle, one end of the output wire 131 is pressed and fixed on the carrier 221 by the pressing member 222, so that the output wire 131 is correspondingly electrically connected to the conductive wire 21 to access an external power source, a signal, etc., thus meeting various functional requirements. In addition, since the pressing member 222 is detachably connected to the carrier 221, when the conductive wire 21 and the output wire 131 have, for example, a connection problem and require maintenance, the pressing member 222 and the carrier 221 can be separated, thereby separating the output wire 131 from the docking portion 22, so that the output wire 131 can be disconnected from the conductive wire 21, and the wire assembly 20 can be disassembled and replaced separately without having to replace the functionalized glass 10 along with the wire assembly 20, which greatly reduces maintenance costs.

In the present application, unless otherwise expressly specified and limited, the terms "mount", "connect", "couple", "fix" and the like should be interpreted broadly. For example, the terms can mean fixed connection, detachable connection, or being integrated. The terms can mean mechanical connection or electrical connection. The terms can mean directly connection or indirectly connection through an intermediate medium. The terms can mean connection within two elements or interaction relationship between two elements, unless otherwise expressly limited. For those skilled in the art, the specific meaning of the above terms in the present application should be understood according to the specific situation.

The technical features of the above embodiments can be combined in any way. For the sake of brevity, not all possible combinations of the technical features in the above embodiments are described. However, as long as there is no contradiction in the combination of these technical features, they should be considered to be within the scope of this description.

The foregoing descriptions are merely specific embodiments of the present application, but are not intended to limit the protection scope of the present application. It should be noted out that any variation or replacement readily figured out by a person skilled in the art within the technical scope disclosed in the present application shall all fall within the protection scope of the present application. Therefore, the protection scope of the present application shall be subject to the protection scope of the appended claims.

## Claims

1. A glass assembly, comprising:
a functionalized glass provided with an output wire; and
a wire assembly comprising a conductive wire and a docking portion connected to one end of the conductive wire, the docking portion being detachably connected to the output wire; wherein when the output wire is connected to the docking portion, the output wire is electrically connected to the conductive wire; and when the output wire is separated from the docking portion, the output wire is disconnected from the conductive wire.

2. The glass assembly according to claim 1, wherein the docking portion comprises a circuit board and a docking connector provided on the circuit board, the docking connector is electrically connected to the conductive wire, and the docking connector is detachably connected to the output wire.

3. The glass assembly according to claim 2, wherein the docking connector comprises a pressing connector configured to press the output wire against the circuit board;
or, the docking connector is provided with a plug-in interface or an engaging interface, and the output wire is plugged into the plug-in interface or engaged with the engaging interface.

4. The glass assembly according to claim 1, wherein the docking portion comprises a carrier and a pressing member detachably mounted on the carrier, one end of the conductive wire is connected to the carrier, one end of the output wire is pressed and fixed on the carrier by the pressing member; when one end of the output wire is pressed and fixed by the pressing member, the output wire is electrically connected to the conductive wire; and when the output wire is separated from the docking portion, the output wire is disconnected from the conductive wire.

5. The glass assembly according to claim 4, wherein the pressing member is fixed to the carrier by engagement, fastening with a fastener, adhesion, or welding.

6. The glass assembly according to claim 5, wherein the carrier is provided with two first connecting portions that are spaced apart, opposite sides of the pressing member are respectively fixed to the two first connecting portions by engagement, fastening with the fastener, adhesion, or welding, and the output wire is located in an area between the two first connecting portions.

7. The glass assembly according to claim 4, wherein the pressing member is provided with at least one protruding portion, the output wire comprises at least one first conductive unit, and the protruding portion is correspondingly pressed against the first conductive unit.

8. The glass assembly according to claim 7, wherein the output wire is configured as a flexible flat cable, the first conductive unit is a flat metal wire provided on the flexible flat cable; a plurality of first conductive units are provided, a plurality of protruding portions are provided, and each protruding portion is correspondingly pressed against each first conductive unit .

9. The glass assembly according to claim 4, wherein the carrier is provided with a first conductive connection structure electrically connected to one end of the conductive wire, the first conductive connection structure comprises at least one first electrical connection portion, the output wire comprises at least one first conductive unit, and each first electrical connection portion is electrically connected to each first conductive unit correspondingly.

10. The glass assembly according to claim 9, wherein the pressing member is provided with a second conductive connection structure, the second conductive connection structure comprises at least one second electrical connection portion,
when the pressing member is pressed against the output wire, each second electrical connection portion is in close conductive contact with each first conductive unit correspondingly, and each second electrical connection portion is further in close conductive contact with each first electrical connection portion correspondingly;
or, when the pressing member is pressed against the output wire, each first conductive unit is in close conductive contact with each first electrical connection portion correspondingly.

11. The glass assembly according to claim 10, wherein the carrier is provided with a boss, the first electrical connection portion comprises a first electrical connection section provided on a top surface of the boss, the output wire is configured as a flexible flat cable, a thickness of the flexible flat cable is defined as d, a distance from the top surface of the boss to a surface of the carrier is defined as S, and 0.8S ≤ d ≤ 1.2S.

12. The glass assembly according to claim 11, wherein the first electrical connection portion further comprises a second electrical connection section provided on a side surface of the boss, the second electrical connection section is electrically connected to the first electrical connection section, and the second electrical connection section is further electrically connected to the conductive wire.

13. The glass assembly according to claim 9, wherein the carrier is a circuit board, the carrier is provided with a third conductive connection structure located between the conductive wire and the first conductive connection structure, the conductive wire is conductively connected to the first conductive connection structure through the third conductive connection structure, the third conductive connection structure comprises at least one adapter wire, each adapter wire is correspondingly electrically connected to each first electrical connection portion, and each adapter wire is correspondingly electrically connected to each second conductive unit of the conductive wire.

14. The glass assembly according to claim 4, further comprising a protective box, wherein the docking portion is mounted in the protective box, and the output wire and the conductive wire respectively extend through the protective box and extend into an interior of the protective box.

15. The glass assembly according to claim 14, wherein the output wire is provided with a third engaging portion, the carrier or the protective box is provided with a fourth engaging portion engaged with the third engaging portion, and the third engaging portion and the fourth engaging portion are engaged with each other.

16. The glass assembly according to claim 15, wherein the third engaging portion comprises a third buckle provided on the output wire, the fourth engaging portion comprises a third engaging groove provided on the carrier or the protective box, and the third buckle is engaged with the third engaging groove;
and/or, the fourth engaging portion comprises a fourth engaging groove provided on the output wire, the third engaging portion comprises a fourth buckle provided on the carrier or the protective box, and the fourth buckle is engaged with the fourth engaging groove.

17. The glass assembly according to claim 15, wherein the output wire is a flexible flat cable, opposite sides of the output wire are provided with two third engaging portions, respectively, and two fourth engaging portions are provided corresponding to the two third engaging portions.

18. The glass assembly according to claim 4, wherein the output wire is provided with a first positioning portion, the carrier is provided with a second positioning portion, and the first positioning portion and the second positioning portion are in positioning fit with each other;
and/or, the output wire is provided with a third positioning portion, the protective box is provided with a fourth positioning portion, and the third positioning portion and the fourth positioning portion are in positioning fit with each other.

19. The glass assembly according to claim 18, wherein the first positioning portion comprises a first positioning hole provided on the output wire, the second positioning portion comprises a first positioning member provided on the carrier, and the first positioning member extends through the first positioning hole; and/or, the first positioning portion comprises a second positioning member provided on the output wire, the second positioning portion comprises a second positioning hole provided on the carrier, and the second positioning member extends through the second positioning hole;
and/or, the third positioning portion comprises a third positioning hole provided on the output wire, the fourth positioning portion comprises a third positioning member provided on the protective box, and the third positioning member extends through the third positioning hole;
and/or, the third positioning portion comprises a fourth positioning member provided on the output wire, the fourth positioning portion comprises a fourth positioning hole provided on the protective box, and the fourth positioning member extends through the fourth positioning hole.

20. A vehicle, comprising the glass assembly according to any one of claims 1 to 19 and a vehicle body, and the glass assembly being mounted on the vehicle body.
